# DEMANDE DE BREVET EUROPEEN

(11) **EP 0 530 066 A1**
(43) Date de publication de la demande: **03.03.1993**
(21) Numéro de dépôt: 92402170.2
(22) Date de dépôt: 27.07.1992
(51) Int. Cl.: G06F 13/26

(54) **Contrôleur d'interruption programmable, système interruptif et procédé de contrôle d'interruption**

(30) Priorité: 22.08.1991 FR 9110517
(71) Demandeur: AEG SCHNEIDER AUTOMATION, F-75016 Paris (FR)
(72) Inventeur: Erramoun, Dominique, F-06250 Mougins (FR); Karcher, Jean-François, F-06560 Valbonne (FR)
(74) Mandataire: Carias, Alain

(57) **Abrégé**

Le contrôleur d'interruption selon l'invention comprend des moyens de mémorisation (2) des demandes d'interruption émanant des sources d'interruption, un registre de masque d'interruption (7) permettant d'inhiber ou d'autoriser individuellement, par programmation, chaque niveau d'interruption, des moyens de mémorisation (8) d'une pluralité de vecteurs correspondant, chacun à une source d'interruption, des moyens de mémorisation (6) du vecteur le plus prioritaire, en cours de service, des moyens de comparaison (9) pour comparer systématiquement chacun des vecteurs actifs et non masqués au vecteur mémorisé dans les moyens (6) et pour charger lesdits moyens (6) avec le vecteur le plus prioritaire, et des moyens (5) d'émission en contention, sur un bus de données (D7-0) du vecteur le plus prioritaire.

L'invention s'applique aux systèmes interruptifs à microprocesseur, destinés à recevoir des demandes d'interruption d'une pluralité de sources d'interruption.

## Description

La présente invention se rapporte, d'une part, à un contrôleur d'interruption programmable destiné à recevoir des demandes d'interruption d'une pluralité de sources d'interruption (organes périphériques : entrées-sorties, coprocesseurs, etc...), et à communiquer, après hiérarchisation, ces demandes d'interruption au microprocesseur via le bus de données, et d'autre part, à un système interruptif à microprocesseur mettant en oeuvre ce contrôleur et à un procédé de contrôle d'interruption.

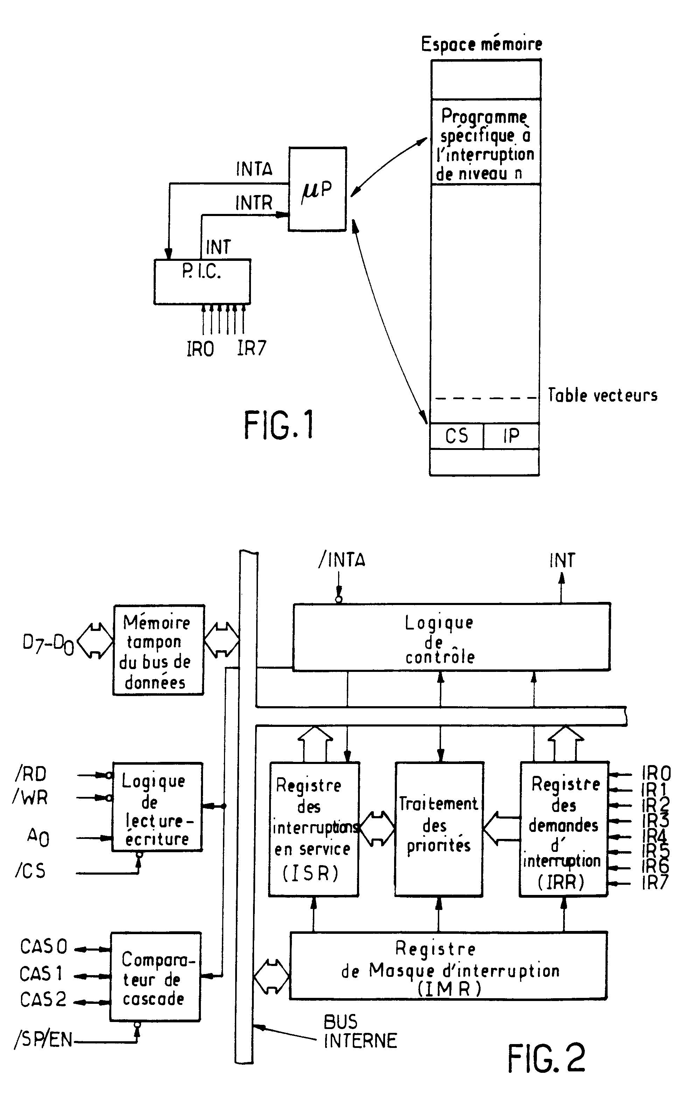

Dans un système à microprocesseur tel que celui représenté à la figure 1, les organes périphériques exécutent des tâches indépendamment du microprocesseur désigné µP et doivent pouvoir communiquer avec ce microprocesseur de manière aléatoire dans le temps, c'est-à-dire selon un fonctionnement asynchrone. L'organe périphérique émet un signal de demande d'interruption qui est traité par un contrôleur d'interruption désigné par "PIC". Celui-ci est un circuit qui possède généralement huit niveaux d'interruption hiérarchisés. Lorsqu'une ou plusieurs entrées "demande d'interruption" du contrôleur est (sont) activée(s), le contrôleur détermine quelle demande a la plus haute priorité et fournit en conséquence au microprocesseur, un signal d'interruption spécifique de la demande d'interruption choisie.

Les contrôleurs d'interruption de la série 8259 que fabrique la société INTEL Corporation sont décrits dans la publication "Microprocessor and Peripherical Handbook" d'INTEL, pages 3-171 à 3-195 d'octobre 1988.

La figure 2 est un bloc diagramme du contrôleur d'interruption 8259A. Les brevets européens EP - 0 358 330 et EP - 0 426 331 décrivent des contrôleurs d'interruption du type du 8259A.

Ce contrôleur d'interruption 8259A reçoit sur ses entrées IR0 à IR7 jusqu'à huit demandes d'interruption hiérarchisées. Dès qu'une demande d'interruption apparaît sur l'une des entrées IR0 à IR7, le contrôleur d'interruption La mémorise et adresse au microprocesseur, par sa sortie INT, une demande d'interruption. Le microprocesseur termine l'instruction en cours et génère deux impulsions sur l'entrée /INTA du contrôleur. Ce dernier envoie alors sur le bus données un code spécifique de l'interruption.

Le contrôleur comprend un registre des demandes d'interruption qui reçoit les huit entrées "demandes d'interruption" (1 bit par entrée IRi). Ce registre estappelé "INTERRUPT REQUEST REGISTER" et désigné par IRR. Un registre des interruptions en service a mémorisé la demande en cours de service ou d'exécution ou les demandes lorsque la demande en cours a été interrompue par une demande de plus haute priorité. Ce registre est appelé "IN-SERVICE REGISTER" et désigné par ISR. Un bloc fonctionnel appelé "PRIORITY RESOLVER" détermine les priorités stockées dans le registre IRR et envoie un code spécifique de la priorité sélectionnée dans le registre ISR. Un registre de masque d'interruption permet d'inhiber ou d'autoriser individuellement chaque niveau d'interruption. Il est désigné par IMR ("INTERRUPT MASK REGISTER").

Le bit IRRi étant actif, le bit ISRi est activé par le bloc fonctionnel "PRIORITY RESOLVER" sur réception d'une impulsion /INTA, si le niveau i est de priorité plus forte que les autres niveaux actifs dans le registre IRR et dans le registre ISR et si IMRi = 0. Il est désactivé par une commande de fin d'interruption dans la routine d'interruption (sauf Automatic End of Interrupt Mode).

Un bit ISR actif signifie que le microprocesseur a acquitté la demande par une séquence INTA. Soit le microprocesseur est en train d'exécuter la routine d'interruption associée, soit il a commencé à le faire mais il a été dérouté vers une routine d'interruption plus prioritaire. Plusieurs bits peuvent donc être actifs simultanément.

Le bloc appelé "PRIORITY RESOLVER" dispose d'une information supplémentaire qui est le niveau auquel est associée la priorité la plus basse. Par défaut, ce niveau est IR7 mais il peut être modifié par le mode priorité tournante ("Specific Rotation ou Automatic Rotation"). Les priorités associées aux autres niveaux s'en déduisent par simple rotation.

Plusieurs contrôleurs 8259A de INTEL peuvent être associés pour augmenter le nombre de niveaux d'interruption. L'un des contrôleurs devient le contrôleur maître, les autres étant les contrôleurs esclaves. Le contrôleur maître qui est relié au microprocesseur est chargé de hiérarchiser les interruptions arrivant sur les différents contrôleurs. Cette solution manque de souplesse.

Le brevet européen EP - 0 426 081 décrit un contrôleur d'interruption programmable pouvant être associé à d'autres contrôleurs identiques. On retrouve un agencement du type maître-esclave.

La présente invention a pour but de fournir un contrôleur ayant une pluralité d'entrées d'interruption (m entrées) qui peut être associé à une pluralité de contrôleurs identiques (n contrôleurs) de manière que les entrées d'interruption (m x n) soient programmables. L'ordre des priorités relatives des entrées d'interruption de chaque circuit est programmable d'une façon quelconque. Elle permet de déterminer librement la hiérarchie des interruptions sur l'ensemble des contrôleurs du système interruptif.

Le contrôleur d'interruption selon l'invention comprend :
- des moyens de mémorisation des demandes d'interruption recevant, sur une pluralité d'entrées, les signaux "demande d'interruption" venant des sources d'interruption ;
- des moyens de mémorisation masque pour inhiber ou autoriser individuellement, par programmation, chaque niveau d'interruption ;

et est caractérisé par le fait qu'il comporte :
- des moyens de mémorisation d'une pluralité de multiplets ou vecteurs correspondant chacun à une source d'interruption ;
- des moyens de mémorisation du multiplet ou vecteur le plus prioritaire en cours de service ;
- des moyens pour comparer systématiquement chacun des vecteurs actifs et non masqués au vecteur mémorisé dans les moyens de mémorisation du vecteur prioritaire et pour charger lesdits moyens avec le vecteur le plus prioritaire des deux ;
- des moyens d'émission en contention, sur le bus de données, le vecteur le plus prioritaire ou gagnant.

Selon une caractéristique, les moyens d'émission en contention sur le bus de données du vecteur le plus prioritaire comprennent un circuit d'émission-réception et un circuit logique de contention.

Selon une autre caractéristique, les moyens d'émission en contention comportent des moyens pour ne valider l'émission, vers le bus de données, d'un bit du vecteur gagnant que s'il y a égalité entre le bit de poids immédiatement supérieur dudit vecteur gagnant et le bit de même poids des données (DIN) en entrée.

Selon une autre caractéristique, les moyens d'émission en contention comportent des moyens pour valider l'émission d'un bit du vecteur gagnant vers le bus de données si le bit est dans l'état dominant et pour ne pas valider l'émission si ce bit est dans l'état récessif.

Selon une autre caractéristique, le contrôleur d'interruption est caractérisé par le fait qu'il comporte un séquenceur pour sélectionner à tour de rôle un des vecteurs mémorisés dans les moyens de mémorisation des vecteurs ainsi que la demande d'interruption et le masque correspondant de manière que les moyens de comparaison comparent, si la demande d'interruption est active et le masque inactif, le vecteur sélectionné au vecteur gagnant et commandent le chargement des moyens de mémorisation du vecteur prioritaire ou gagnant par le vecteur le plus prioritaire.

Selon une caractéristique, le contrôleur comporte un registre mémorisant l'état du séquenceur associé au vecteur gagnant, le chargement de ce registre étant contrôlé par le bloc logique de contrôle.

Selon l'invention, le procédé consiste à :
- recevoir les demandes d'interruption, d'une pluralité de sources d'interruption et à mémoriser ces demandes d'interruption,
- inhiber ou autoriser individuellement chaque niveau d'interruption ;

et il est caractérisé par le fait qu'il consiste à :
- mémoriser une pluralité de multiplets ou vecteurs correspondant chacun à une source d'interruption,
- mémoriser le multiplet ou vecteur le plus prioritaire en cours de service,
- comparer systématiquement chacun des vecteurs actifs et non masqués au vecteur mémorisé et mémoriser le vecteur le plus prioritaire des deux ou vecteur gagnant,
- émettre en contention sur le bus de données le vecteur le plus prioritaire ou vecteur gagnant.

Selon l'invention, le procédé de contrôle d'interruption consiste à valider l'émission, vers le bus de données d'un bit du vecteur gagnant que s'il y a égalité entre le bit de poids immédiatement supérieur dudit vecteur gagnant et le bit de même poids des données en entrée.

L'invention va être maintenant décrite avec plus de détails en se référant à des modes de réalisation donnés à titre d'exemples non limitatifs, avec référence aux dessins annexés, dans lesquels :
La figure 1 est un diagramme simplifié d'un système interruptif connu en soi ;
La figure 2 est un schéma fonctionnel du contrôleur d'interruption programmable connu ;
La figure 3 est un schéma fonctionnel du contrôleur d'interruption programmable selon l'invention ;
La figure 4 est un schéma d'un circuit émission-réception du contrôleur selon l'invention ;
La figure 5 est un schéma du circuit logique de contention du contrôleur selon l'invention ; et
La figure 6 est un schéma d'un système interruptif comprenant plusieurs contrôleurs d'interruption programmables selon l'invention.

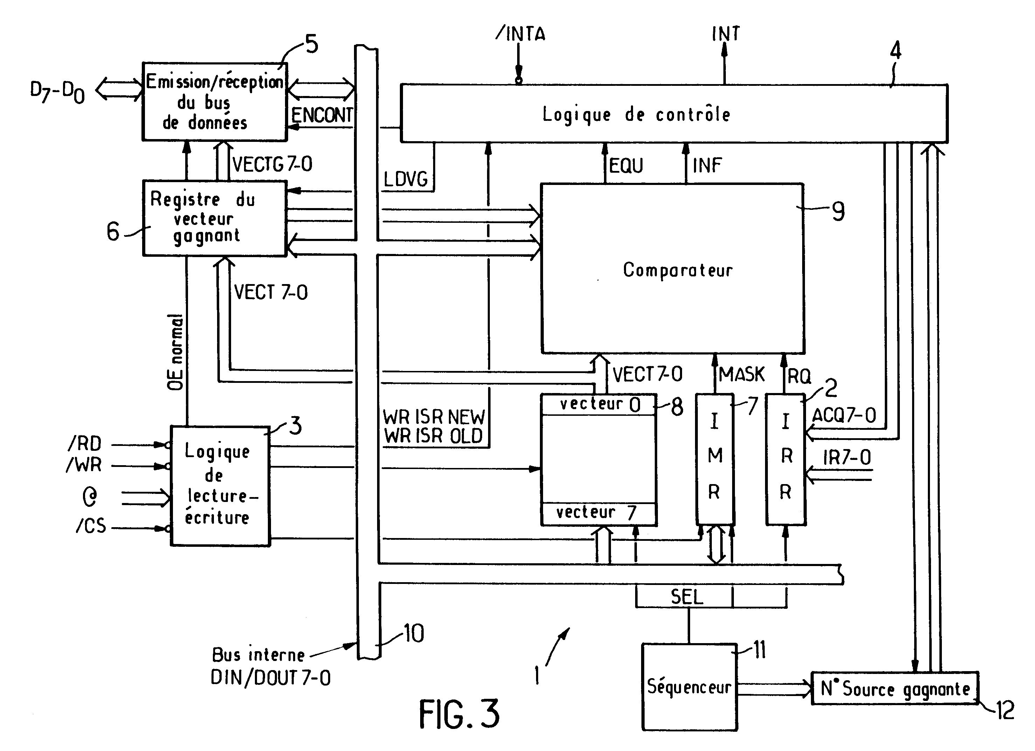

En se référant à la figure 3, la référence 1 désigne le contrôleur d'interruption selon l'invention.

Ce contrôleur d'interruption 1 assure l'interface entre un microprocesseur non représenté et une pluralité d'organes périphériques d'entrée-sortie ou coprocesseurs qui constituent des sources d'interruptions indépendantes, c'est-à-dire pouvant apparaître simultanément.

Le registre comporte un registre 2 appelé registre des demandes d'interruption, un registre 7 appelé registre de masque d'interruption, un bloc 3 de logique de lecture-écriture, un bloc 4 de logique de contrôle, un bloc 5 d'émission/réception du bus de données, un registre 6 appelé registre du vecteur gagnant, un bloc 8 des registres des vecteurs, un comparateur 9, un séquenceur 11, un registre 12 "Numéro de la source gagnante".

Les signaux "demandes d'interruption" venant des sources sont reçus sur des lignes "demande d'interruption" IR0 à IR7.

Le bloc logique de lecture-écriture 3 qui reçoit les signaux /RD, /WR, @ par des broches reliées au processeur permet la communication entre le contrôleur d'interruption et le processeur via le bus de données bidirectionnel D₀ - D₇. Le "/" accolé au signal signifie que la commande sera active au niveau 0 et inactive au niveau 1. La ligne d'écriture /WR lorsqu'elle est activée permet au contrôleur d'accepter des données du processeur. La ligne de lecture /RD lorsqu'elle est activée permet au processeur d'obtenir des données du contrôleur. La ligne d'adresse @ agit en conjonction avec /RD et /WR. La ligne de signal /CS sert à activer ou inhiber tout le contrôleur. Ce bloc 3 génère les commandes de lecture et écriture des registres 7 et 8 accessibles au microprocesseur. Il génère la commande du buffer de sortie des données lors d'une lecture de registre.

La ligne INT sert à envoyer un signal "demande d'interruption" au microprocesseur. La ligne /INTA reçoit le signal "autorisation d'interruption" émis par le microprocesseur sur sa broche INTA du même nom en réponse au signal INT.

Le bloc de logique de contrôle 4 est un circuit logique qui contrôle la transmission des demandes d'interruption au microprocesseur via la ligne d'interruption INT et qui reçoit les signaux "d'autorisation d'interruption" du microprocesseur via la ligne d'autorisation d'interruption /INTA. De plus ce bloc assure l'acquittement du registre 2 (signaux ACQi) et valide l'émission en contention du vecteur gagnant par le bloc 5 (signal ENCONT). Il commande le chargement du vecteur gagnant dans le registre 6 (signal LDVG) et le chargement du numéro de la source gagnante dans le registre 12.

Les demandes d'interruption provenant des différentes sources d'interruption sont appliquées sur les lignes "demande d'interruption" IR0 à IR7 qui sont reçues sur le registre des demandes d'interruption 2. Ce registre des demandes d'interruption 2 du type "Set-Reset" mémorise l'identité de n'importe quelle ligne d'interruption IR0 - IR7. Les demandes d'interruption sont activées par IR7-0 et sont désactivées par ACQ7-0. Ce registre a une fonction de multiplexeur en sortie pour sélectionner un des 8 bits (RQ).

Le registre 7 à 8 bits (un bit par niveau), appelé registre de masque d'interruption, sert à spécifier si ce niveau est masqué (c'est-à-dire inhibé) ou non. En d'autres termes, un bit à 1 indique que la ligne correspondante n'est pas à prendre en compte. Ce registre 7 mémorisant le masque a une fonction de multiplexeur en sortie pour sélectionner un des 8 bits (MASK).

A chaque source d'interruption est associé un multiplet (de 8 bits) désigné vecteur d'interruption. Chacune des sources est associée à ce vecteur qui définit la priorité de cette source par rapport aux autres sources du même contrôleur mais également par rapport à toutes les autres sources des autres contrôleurs. Il n'y a donc pas de hiérarchie globale des interruptions d'un contrôleur par rapport à celle d'un autre contrôleur.

Ces vecteurs peuvent être écrits dans le bloc 8 des registres des vecteurs via le bus de données. Ce bloc 8 des registres des vecteurs qui mémorise les 8 vecteurs d'interruption a une fonction de multiplexeur en sortie pour sélectionner un des 8 vecteurs (VECT 7-0).

Le vecteur d'interruption sert à la fois de pointeur dans la table des adresses de routines d'interruption (Table d'Interruption) et de priorité de l'interruption par rapport aux autres sources. Cette valeur de vecteur n'a aucun lien à priori avec le numéro de niveau de l'interruption. L'association numéro de niveau-vecteur est un choix logiciel fait à la configuration du système. La valeur de vecteur 00H correspond à la priorité la plus forte.

Un bloc comparateur 9 est relié au registre des demandes 2, et au registre de masque d'interruption 7. Il est également relié au registre "vecteur gagnant" 6 et au bloc 8 des registres de vecteurs.

Le contrôleur comporte un registre 6 à 8 bits désigné registre du "vecteur gagnant". Le contrôleur met à jour ce registre du "vecteur gagnant" qui mémorise le vecteur de 8 bits le plus prioritaire entre, d'une part, les vecteurs des sources d'interruptions actives et non masquées et, d'autre part, le vecteur ISR de l'interruption traitée par le microprocesseur. Le registre 6 du vecteur gagnant a une fonction de multiplexeur en entrée pour deux types de chargement (VECT 7-0 ou DIN 7-0).

Le bloc séquenceur 11 sélectionne à tour de rôle un des huit vecteurs du registre 8, ainsi que la demande d'interruption et le masque correspondant, respectivement dans les registres 2 et 7 (commandes SEL). Si la demande d'interruption est active et le masque inactif, le bloc comparateur 9 compare ce vecteur sélectionné par le séquenceur (désigné VECT 7-0) au vecteur gagnant (désigné VECTG 7-0) mémorisé dans le registre 6 pour déterminer le plus prioritaire. Le bloc comparateur 9 envoie un signal INF au bloc 4 si le vecteur VECTi sélectionné est plus prioritaire que le vecteur gagnant. Le bloc 4 commande alors par le signal LDVG envoyé au registre 6 le chargement du vecteur gagnant dans le registre 6 par le nouveau vecteur VECTi, si ce dernier est plus prioritaire.

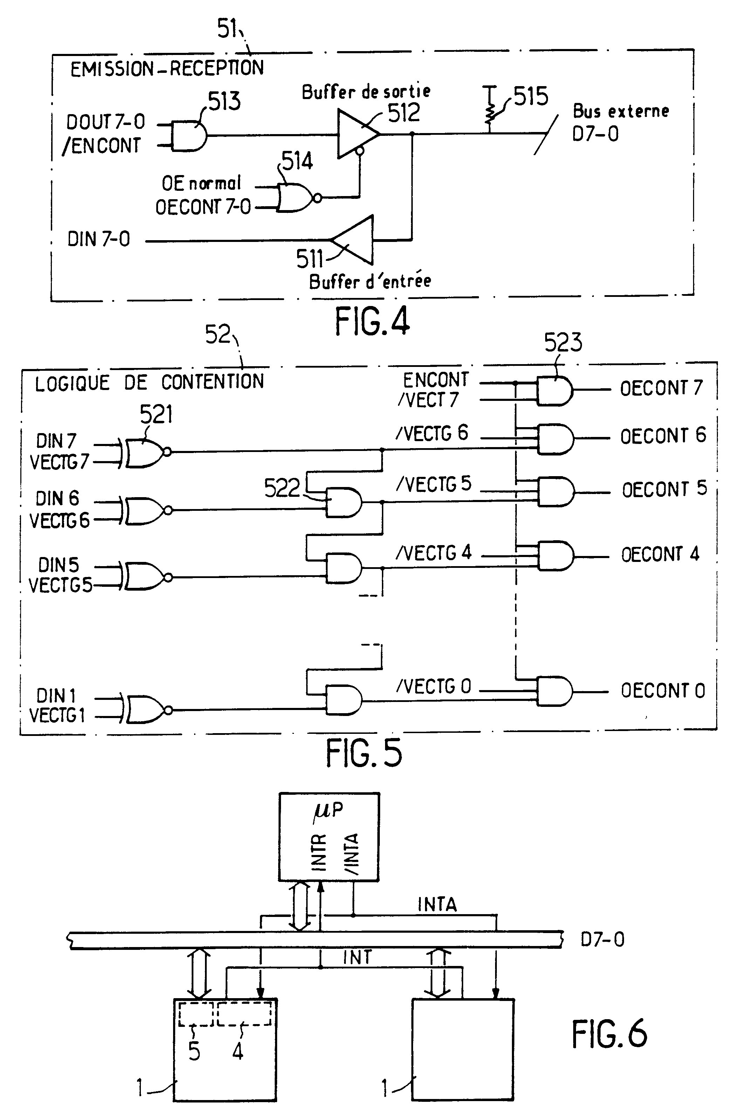

L'interface entre le contrôleur et le bus de données est assurée par le bloc d'émission-réception 5. Ce bloc 5 comporte un circuit d'émission-réception représenté schématiquement à la figure 4 et un circuit dit "logique de contention" représenté schématiquement à la figure 5.

La figure 4 illustre à titre d'exemple le circuit d'émission-réception, repéré 51, assurant la liaison avec le bus de données D7-0. Ce circuit comprend un buffer d'entrée 511 assurant la réception des données du bus externe vers le bus interne (DIN7-0) et un buffer de sortie permettant l'émission des données vers le bus externe D7-0. Ce buffer de sortie 512 permet l'émission en mode normal (commande de buffer OE normal) et l'émission en contention du vecteur gagnant lorsque l'entrée ENCONT de la porte ET 513 est activée par le bloc 4.

La figure 5 illustre à titre d'exemple le circuit logique de contention repéré 52. Ce circuit comporte une pluralité de comparateurs d'égalité 521 (portes NXOR) qui reçoivent chacun un bit 1 à 7 du vecteur gagnant VECTG, en même temps que le bit correspondant présent sur le bus DIN7-1. La sortie de chaque comparateur 521 est appliquée sur une entrée d'une porte ET 522 dont l'autre entrée est reliée à la sortie de la porte ET correspondant au bit immédiatement supérieur. Les sorties des portes 522 sont appliquées à des portes ET 523 recevant par ailleurs le signal ENCONT de validation de l'émission en contention et les signaux /VECT 7-0. Les signaux de sortie OECONT de ces portes 523 sont injectés sur les portes 514 associées au buffer de sortie 512.

Le registre 6 est chargé sur une écriture du microprocesseur de ISR-NEW et sur une écriture de ISR OLD si le contrôleur n'a pas émis d'interruption.

Le registre "vecteur gagnant" 6 est accessible au microprocesseur par deux adresses différentes à savoir :
- IRS-NEW : le microprocesseur effectue cette écriture en début de routine d'interruption avec le résultat de la contention, c'est-à-dire le vecteur gagnant entre tous les composants. Lorsqu'il reçoit la commande WR ISR NEW, le contrôleur charge son registre vecteur gagnant 6 avec la priorité (vecteur) qui a gagné la contention. Ce vecteur gagnant sera donc éventuellement écrasé par le vecteur d'une interruption plus prioritaire. Cette commande se traduit dans le contrôleur qui a gagné la contention par l'acquittement de la source associée au vecteur gagnant, (signaux ACQi générés par le bloc 5),
- IRS-OLD : le microprocesseur effectue cette écriture en fin de routine d'interruption avec le vecteur ISR de la précédente routine qui avait été interrompue.

Le registre 6 contient donc soit ISR, soit un vecteur plus prioritaire que ISR.

Le chargement dans le registre 6 du vecteur correspondant à une des sources IR0 - IR7 provoque l'activation de la ligne INT reliée au microprocesseur.

A la réception du signal INTA émis par le microprocesseur, le bloc 4 du contrôleur donne un signal ENCONT qui valide l'émission par le bloc d'émission-réception 5 du vecteur en contention sur le bus de données D7-0.

Lorsqu'en début de routine d'interruption, le microprocesseur écrit ISR-NEW, le contrôleur compare ce vecteur avec celui qu'il a émis. Le comparateur 9 teste l'égalité entre les données du bus interne DIN7-0 et le vecteur gagnant VECTG7-0. Si ces vecteurs sont égaux, le comparateur 9 envoie le signal EQU au bloc 4. Celui-ci acquitte la source IR0 - IR7 correspondante par les lignes ACQ7-0. Pour cela, le chargement du vecteur gagnant doit être inhibé depuis le début du signal INTA jusqu'à l'écriture de ISR-NEW. Le registre 6 a mémorisé ainsi le vecteur émis en contention.

Pour permettre l'acquittement de la source IR0 - IR7 associée au vecteur gagnant, le registre "numéro de la source gagnante" 12 mémorise l'état du séquenceur 11 associé au vecteur gagnant. Son chargement est contrôlé par le bloc 4.

La figure 6 montre un système interruptif à plusieurs contrôleurs 1. Chacun de ces contrôleurs est relié par son entrée INT de demande d'interruption à l'entrée INTR du microprocesseur et par sa broche /INTA à la broche INTA du microprocesseur. Tous les contrôleurs 1 recevant le signal /INTA et ayant activé leur sortie INT (signal ENCONT actif) émettent simultanément en contention sur le bus données 10 leur vecteur gagnant. Cette émission s'effectue sur les 8 bits données poids faible du bus données.

Cette situation de contention correspond au fait que les différents contrôleurs 1 émettent au même instant sur le bus de données D7-0 par l'intermédiaire de leur bloc d'émission-réception 51. La discrimination entre les vecteurs émis par les différents contrôleurs de manière à déterminer le vecteur le plus prioritaire, s'effectue de la manière suivante.

Le vecteur vainqueur de la contention s'établit bit après bit en commençant par le bit de poids fort.

Chaque contrôleur, par le circuit de contention 52, ne valide l'émission d'un bit i vers le bus de données que s'il y a égalité entre le bit (i+1) qu'il émet et le bit DIN (i+1) présent sur le bus interne.

Suivant la valeur du bit du vecteur, le contrôleur qui veut émettre est soit dans un état dominant : bit à 0, soit dans un état récessif : bit à 1.

Dans l'état dominant (bit à 0), le signal OECONT valide le buffer de sortie 512 faisant partie du circuit d'émission-réception 51 de manière à ce qu'il émette un 0. Le contrôleur a nécessairement gagné la contention sur ce bit mais peut être encore à égalité avec un autre contrôleur. Le bit ou les bits suivants permettront de les départager.

Dans l'état récessif (bit à 1), il ne valide pas son buffer de sortie 512. Soit tous les contrôleurs 1 sont dans l'état récessif pour ce bit, c'est une résistance de rappel 515 qui imposera la valeur 1 sur ce bus ; le contrôleur peut continuer à émettre. Soit au moins un des contrôleurs est dans l'état dominant (0) et va donc gagner la contention ; le contrôleur ne peut plus continuer à émettre, il a perdu la contention.

L'émission du vecteur n'est pas séquencée bit par bit. Pendant toute la durée du signal /INTA le contrôleur valide son mécanisme d'émission en contention sur les 8 bits. Mais c'est le temps d'aller-retour sur le bus qui va faire que le vecteur vainqueur ne s'établira qu'au fur et à mesure, en commençant par le bit de poids fort.

Le microprocesseur est bloqué par son "READY", le temps nécessaire à la contention. A la fin de la deuxième impulsion /INTA, il va se dérouter pour traiter l'interruption associée au vecteur gagnant présent sur le bus. Lorsqu'en début de routine d'interruption, le microprocesseur écrit ISR-NEW, le contrôleur compare ce vecteur avec celui qui a été émis. S'ils sont égaux, il acquitte la source correspondante. Pour cela, le chargement du vecteur gagnant doit être inhibé depuis le début du signal /INTA jusqu'à l'écriture de ISR-NEW. Le registre du vecteur gagnant 6 mémorise ainsi le vecteur qui a été émis en contention.

Il est bien entendu que l'on peut sans sortir du cadre de l'invention imaginer des variantes et des perfectionnements de détails et, de même, envisager l'emploi de moyens équivalents.

## Revendications

1. Contrôleur d'interruption programmable (1) pour système interruptif à microprocesseur, destiné à recevoir des demandes d'interruption d'une pluralité de sources d'interruption (organes périphériques) et à communiquer, après hiérarchisation, ces demandes d'interruption au microprocesseur via le bus de données (D7-D0) et comprenant :
- des moyens de mémorisation (2) des demandes d'interruption recevant, sur une pluralité d'entrées (IR0 - IR7), les signaux "demande d'interruption" venant des sources d'interruption ;
- des moyens de mémorisation masque (7) pour inhiber ou autoriser individuellement, par programmation, chaque niveau d'interruption ;
caractérisé par le fait qu'il comporte :
- des moyens de mémorisation (8) d'une pluralité de multiplets ou vecteurs correspondant chacun à une source d'interruption ;
- des moyens de mémorisation (6) du multiplet ou vecteur le plus prioritaire, en cours de service ;
- des moyens de comparaison (9) pour comparer systématiquement chacun des vecteurs actifs et non masqués au vecteur mémorisé dans les moyens de mémorisation (6) du vecteur prioritaire et pour charger lesdits moyens (6) avec le vecteur le plus prioritaire des deux ou vecteur gagnant (VECTG) ;
- des moyens (5) d'émission en contention, sur le bus de données (D7-0), du vecteur le plus prioritaire ou gagnant.

2. Contrôleur d'interruption selon la revendication 1,
caractérisé par le fait que les moyens (5) d'émission en contention sur le bus de données (D7-D0) du vecteur le plus prioritaire comprennent un circuit d'émission-réception (51) et un circuit logique de contention (52).

3. Contrôleur d'interruption selon la revendication 1 ou 2,
caractérisé par le fait que les moyens d'émission en contention (5) comportent des moyens (521, 522) pour ne valider l'émission, vers le bus de données, d'un bit (i) du vecteur gagnant (VECTG) que s'il y a égalité entre le bit (i+1) de poids immédiatement supérieur dudit vecteur gagnant et le bit de même poids (i+1) des données (DIN) en entrée.

4. Contrôleur d'interruption selon l'une quelconque des revendications précédentes,
caractérisé par le fait que les moyens d'émission en contention (5) comportent des moyens (523) pour valider l'émission d'un bit du vecteur gagnant (VECTG) vers le bus de données si le bit est dans l'état dominant et pour ne pas valider l'émission si ce bit est dans l'état récessif.

5. Contrôleur d'interruption selon l'une quelconque des revendications précédentes,
caractérisé par le fait qu'il comporte un séquenceur (11) pour sélectionner à tour de rôle un des vecteurs mémorisés dans les moyens de mémorisation des vecteurs (8) ainsi que la demande d'interruption et le masque correspondant de manière que les moyens de comparaison (9) comparent, si la demande d'interruption est active et le masque inactif, le vecteur sélectionné au vecteur gagnant et commandent le chargement des moyens de mémorisation (6) du vecteur prioritaire ou gagnant par le vecteur le plus prioritaire.

6. Contrôleur d'interruption selon l'une quelconque des revendications précédentes,
caractérisé par le fait qu'il comporte un registre (12) mémorisant l'état du séquenceur (11) associé au vecteur gagnant, le chargement de ce registre étant contrôlé par le bloc logique de contrôle (4).

7. Contrôleur d'interruption selon l'une quelconque des revendications précédentes,
caractérisé par le fait que les moyens de mémorisation (6), dits de service, sont constitués par un registre accessible au microprocesseur par une commande (WR ISR OLD) permettant en fin de routine d'interruption, de redonner au contrôleur d'interruption la priorité de l'interruption précédente.

8. Contrôleur selon la revendication 7,
caractérisé par le fait que le registre (6) est accessible au microprocesseur par une commande (WR IST NEW) donnant en début de routine d'interruption le vecteur gagnant de la contention.

9. Système interruptif comprenant une pluralité de contrôleurs selon l'une quelconque des revendications précédentes,
caractérisé par le fait que chaque contrôleur (1) est relié par son entrée (INT) de demande d'interruption au microprocesseur.

10. Procédé de contrôle d'interruption programmable, consistant à :
- recevoir les demandes d'interruption d'une pluralité de sources d'interruption et à mémoriser ces demandes d'interruption,
- inhiber ou autoriser individuellement chaque niveau d'interruption ;
caractérisé par le fait qu'il consiste à :
- mémoriser une pluralité de multiplets ou vecteurs correspondant chacun à une source d'interruption ;
- mémoriser le multiplet ou vecteur le plus prioritaire en cours de service ;
- comparer systématiquement chacun des vecteurs actifs et non masqués au vecteur mémorisé et mémoriser le vecteur le plus prioritaire des deux ou vecteur gagnant ;
- émettre en contention sur le bus de données le vecteur le plus prioritaire ou vecteur gagnant.

11. Procédé selon la revendication 10,
caractérisé par le fait qu'il consiste à valider l'émission, vers le bus de données d'un bit (i) du vecteur gagnant (VECTG) que s'il y a égalité entre le bit (i+1) de poids immédiatement supérieur dudit vecteur gagnant et le bit de même poids des données (DIN) en entrée.

12. Procédé selon l'une quelconque des revendications 10 et 11,
caractérisé par le fait qu'il consiste à valider l'émission d'un bit du vecteur gagnant, vers le bus de données, si le bit est dans l'état dominant et à ne pas valider l'émission si ce bit est dans l'état récessif.
